# EUROPEAN PATENT APPLICATION

(11) **EP 1 296 166 A1**
(43) Date of publication of application: **26.03.2003**
(21) Application number: 02013260.1
(22) Date of filing: 17.06.2002
(51) Int. Cl.: G02B 6/34, G02B 6/293

(54) **Optical demultiplexing device with optical to electrical conversion**

(30) Priority: 25.09.2001 US 962635
(71) Applicant: Agilent Technologies Inc. (a Delaware Corporation), Palo Alto, CA 94306-2024 (US)
(72) Inventor: Lacey, Jonathan, P., Mountain View, California 94041-1318 (US); Lemoff, Brian, E., Union City, California 94587 (US); Trutna, William, R., Jr., Atherton, California 94027 (US); Zhao, Peter, P., Mountain View, California 94043 (US)
(74) Representative: Schoppe, Fritz, Dipl.-Ing.

(57) **Abstract**

An optical demultiplexer (50) is implemented using a dispersive (30) means and a photodetector array (54). An incoming wave division multiplexed (WDM) signal (11) is dispersed into its component optical channels, and each optical channel is converted into its corresponding electrical signal. Outputs of the optical multiplexer are electrical signals.

## Description

### BACKGROUND

The present invention relates to optical communication devices. More specifically, the present invention relates to an optical demultiplexer and optical to electrical signal conversion.

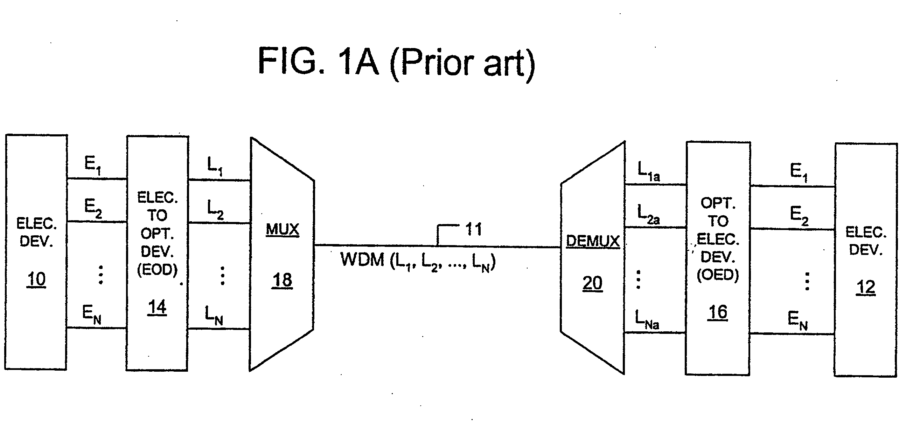

For a high-speed data network, it is common to use a combination of electrical and optical devices to implement various components of the network. For example, Figure 1 illustrates a simplified block diagram of such a hybrid network including first and second electronic devices 10 and 12, electric signal to optical signal device (EOD) 14, optical signal to electric signal device (OED) 16, an optical multiplexer (MUX) 18, and an optical demultiplexer (DEMUX) 20.

Electrical signals, or channels, designated herein as E1, E2, ..., EN, are provided by the first electronic device 10 to the EOD 14. Here, terms "signal" and "channel" are used interchangeably. The EOD 14 converts the electronic signals to optical signals, or channels, L1, L2, ..., LN where the electrical channel E1 corresponds to the optical channel L1, E2 corresponds to L2, and so forth, and where each optical channel has a different carrier wavelength. The optical channels L1, L2, ..., LN are multiplexed by the MUX 18 into a single wave division multiplexed (WDM) signal 11, which is then transmitted. Following the transmission, the WDM signal 11 is demultiplexed by the DEMUX 20 into its component channels, L1a, L2a, ..., LNa where the demultiplexed channel L1a corresponds to the channel L1, L2a corresponds to L1, and so forth. Each of the demultiplexed optical channels is converted back into its corresponding electrical channels by the OED 16 for further processing by a second electrical device 12. In this document and the Figures directional arrows, or rays, such as ray 11 and others are used to indicate general direction of transmission of various optical or electrical signals and are not used to represent ray traces as often used in the optic arts.

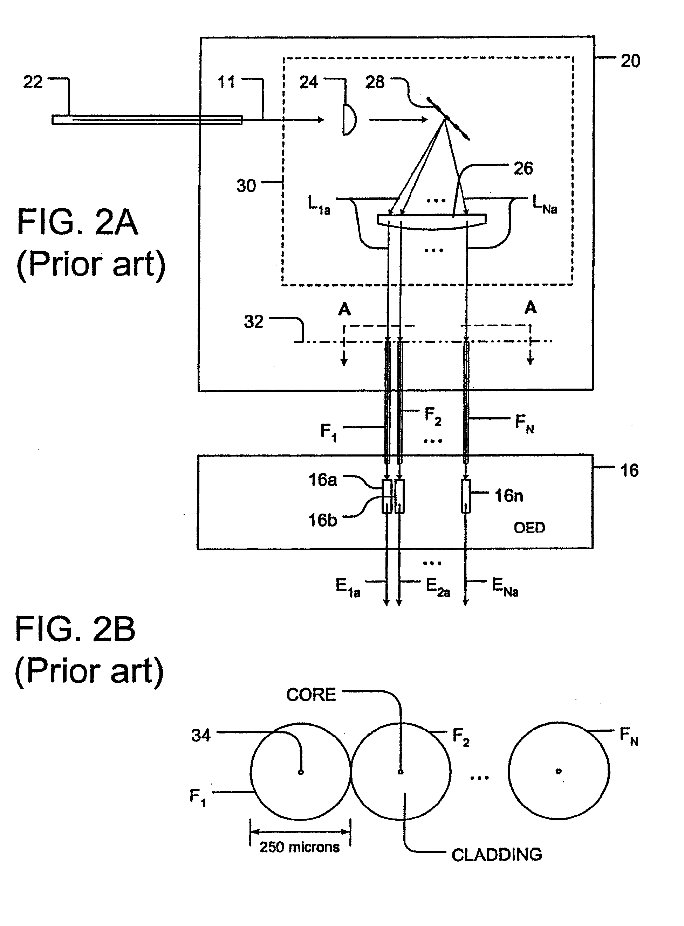

A typical implementation of the DEMUX 20 and the OED 16 are illustrated in more detail in Figure 2A. The optical DEMUX 20 takes a WDM signal 11 (carried on a single-mode optical fiber 22) as its input. The WDM signal 11 is demultiplexed by a complex configuration of optical elements 30 for dispersion of the WDM signal 11 into its component channels, L1, L2, ..., LN. The optical elements 30 can include intricate arrangements of various combinations of optical devices such as lenses, mirrors, crystals, rotators, wave-guides, reflectors, gratings, polarizers, beam splitters, filters, and collimators. In Figure 2A, for brevity, the optical elements 30 are represented only by lenses 24 and 26 and diffractive grating surface 28; however, in actual implementations of the DEMUX 20, the optical elements 30 are numerous and in complex configuration, and many different implementations are possible.

The demultiplexed, or separated, optical channels L1a, L2a, ..., LNa are focused on an output image plane 32 for insertion into output fibers F1, F2, ..., FN. Here, the output plane 32 is a plane where receiving ends of output fibers are positioned such that each of the separated optical channels is focused for insertion into its corresponding output fiber. For example, the channel L1a is focused on the output plane 32 aligned with the end of the output fiber F1, the channel L2a is focused and aligned with the end of the output fiber F2, and so forth.

The demultiplexed optical channels are delivered from the DEMUX 20 to the OED 16 via the output fibers F1, F2, ..., FN. In Figure 2A, the output fibers are illustrated, for clarity, as separately positioned from each other; however, in practice, they may be bunched together as a fiber bundle or ribbon.

The OED 16 converts each of the optical signals into electrical signals E1a, E2a, ..., ENa. The OED 16 can include a plurality of optic to electrical converters 16a, 16b, ..., 16n.

Typically, each of the output fibers F1, F2, ..., FN are single-mode fibers having very small circular core diameter and having small capture angle. The capture angle can be regarded as the maximum incidence angle at which an optical signal presented to the input of the optical fiber will be launched into the core of the fiber.

Figure 2B illustrates a cross-section of the output fibers at the output image plane 32 viewed from line A-A of figure 2A. Each of these fibers may have a diameter of about 250 microns; however, most of that is cladding, and the circular core (for example core 34) diameter is only about 10 microns or less. Further, each of these fibers may have a capture angle of 6 degrees or smaller. Consequently, when the WDM signal 11 is demultiplexed and directed toward the output fibers, each of the demultiplexed channels must be aligned with its corresponding fiber core within a very small tolerance. For instance, the demultiplexed channel L1a must be aligned to the 10-micron core 34 of fiber F1 with a positional tolerance of the order of a micron, and an angular tolerance of the order of 1 degree. Some magnification systems relax the positional tolerance, but only at the expense of tighter angular tolerance. In addition, for telecommunications applications, this alignment must e maintained over a wide temperature range, in the presence of extreme mechanical vibrations, over twenty years.

Because of these exacting requirements, the demultiplexer 20 is costly to manufacture. Each of the optical elements 30, the input fiber 22, and the output fibers F1, F2, ..., FN must be positioned with precision. Further, these must be affixed to a package such that the operation or movement of the device 20 does not cause misalignment of the demultiplexed optical channels to the output fibers.

Moreover, the demultiplexer 20 is susceptible to environmental effects such as temperature. For example, temperature-related expansion or contraction of any of the intricate parts of the demultiplexer 20 causes misalignment of the demultiplexed optical channels to the output fibers.

Accordingly, there remains a need for a demultiplexer overcoming or reducing these shortcomings of the current-art demultiplexers as discussed above.

### SUMMARY

These needs are met by the present invention. According to one aspect of the present invention, dispersive means separates an optical wave division multiplexed (WDM) signal into its component optical signals. Then, a photodetector array converts the component optical signals into electrical signals.

According to another aspect of the present invention, a method of demultiplexing an optical wave division multiplexed (WDM) signal is disclosed. First, the WDM signal is separated into its component optical signals. Then, the component optical signals are detected by photodetectors for conversion to electrical signals.

Other aspects and advantages of the present invention will become apparent from the following detailed description, taken in combination with the accompanying drawings, illustrating by way of example the principles of the invention.

### BRIEF DESCRIPTION OF THE DRAWINGS

Figure 1 illustrates a simplified block diagram of a wavelength-division multiplexed optical transmission system;

Figure 2A illustrates an implementation of the demultiplexer in Figure 1, using a diffraction grating;

Figure 2B illustrates the demultiplexer of Figure 2A along line A-A;

Figure 3A illustrates an optical demultiplexer according to one embodiment of the present invention; and

Figure 3B illustrates the demultiplexer of Figure 3A along line B-B.

### DETAILED DESCRIPTION

As shown in the drawings for purposes of illustration, the present invention is embodied in an optical apparatus including dispersive means for separating an optical wave division multiplexed (WDM) signal into its component optical signals and a photodetector array for converting the component optical signals into electrical signals. The photodetector array can be fabricated with detectors about 150 microns in width. This is more than 15 times the core diameter of a single-mode output fiber used in the prior art demultiplexers. Further, the detection efficiency of the photodetectors is largely independent of incidence angle. This is in contrast to the single-mode fibers of the prior art demultiplexers, in which launch efficiency falls off dramatically for incidence angles that deviate from 90 degrees by more than about 6 degrees. Accordingly, the manufacturing process is less costly, and a demultiplexer according to the present invention is less sensitive to temperature variations and vibrations.

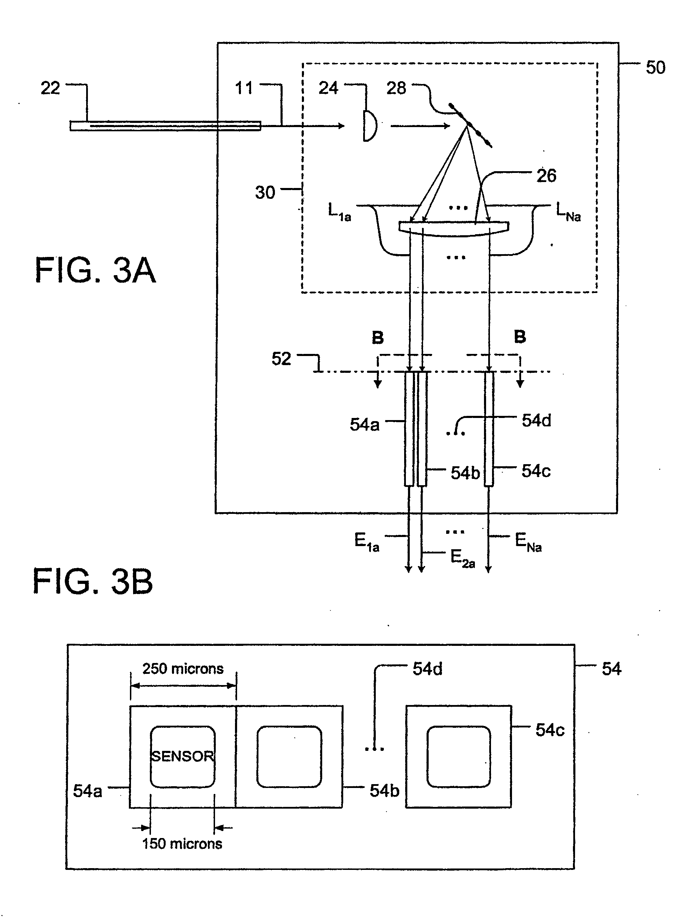

Figure 3A illustrates an optical demultiplexer (DEMUX) 50 according to one embodiment of the present invention. The DEMUX 50 of Figure 3A is illustrated using certain portions that are similar to those shown in Figure 2A. For convenience, portions of the DEMUX 50 that are similar to portions of the DEMUX 20 of Figure 2A are assigned the same reference numerals and different portions are assigned different reference numerals.

Referring to Figure 3A, a WDM signal 11 enters the DEMUX 50 and is dispersed into its component optical channels L1a, L2a, ..., LNa. A group of optical elements 30 may be used for the dispersion of the WDM signal 11 into its component channels. For brevity, the optical elements 30 are represented only by lenses 24 and 26 and surface diffraction grating 28; however, in actual implementations of the DEMUX 50, the optical elements 30 can be numerous and in complex configuration, including (but not limited to) microlens arrays, walkoff crystals, waveplates, colimating lenses, focussing lenses, mirrors, and prisms.

Then, the dispersed optical channels, or signals, are directed toward an output image plane 52 where they are detected by an array of photodetectors. Each optical channel is incident on a separate photodetector. The array of photodetectors are represented by photodetectors 54a, 54b, and 54c along with an ellipsis 54d and collectively referred to using reference number 54.

Each photodetector of the photodetector array 54 is aligned at the output plane 52 to detect one of the component optical channels and convert the detected signal into a corresponding electrical signal.

Figure 3B illustrates cross section of the photodetector array 54 as seen at the output image plane 52 viewed from line B-B of figure 3A. The photodetectors can be separated by about 250 microns, for example, and have a sensor portion that can be about 150 microns wide.

Referring to Figures 3A and 3B, each photodetector of the photodetector array 54 can include integrated electronic amplifier to amplify the converted signal or include other electronic processing circuits, for example tansimpedance amplifiers, limiting amplifiers, and clock and data recovery circuits. In such case, the photodetector may be referred to as a photoreceiver. Alternatively, output electronic signals E1a, E2a, ..., ENa of the DEMUX 50 can be coupled directly into electronic post-amplifiers or processing on a separate integrated circuit (not shown). In this latter case, the photodetectors of the array 54 may be flip-chip bonded to bonded to other electronic components.

Depending on the configuration of the optical elements 30, the photodetector array 54 can be configured as a one-dimensional or a two-dimensional array. In fact, the photodetector array 54 can be built using sets of smaller arrays. For example, a linear photodetector array of 40 detectors may be made up of four monolithic arrays of ten detectors each.

Photodetectors and photodetector arrays are available in the marketplace. For example only, see various optics components including optical signal monitors and detectors available from Sensors Unlimited, Inc. of Princeton, New Jersey and other vendors of optics components.

From the foregoing, it will be appreciated that the apparatus and the methods of the present invention is novel and offers advantages over the current art. Although specific embodiment of the invention are described and illustrated above, the invention is not to be limited to the specific forms or arrangements of parts so described and illustrated. The invention is limited only by the claims.

## Claims

1. An optical demultiplexer (50) comprising:
dispersive means (30) for separating an optical wave division multiplexed (WDM) signal (11) to its component optical signals;
a photodetector array (54) for converting the component optical signals into electrical signals.

2. The demultiplexer (50) recited in claim 1 wherein the photodetector array (54) is aligned at an output plane (52) to detect the component optical signals.

3. The demultiplexer (50) recited in claim 1 wherein each photodetector of the photodetector array (54) includes integrated electronic amplifier.

4. The demultiplexer (50) recited in claim 1 wherein the dispersive means (30) includes a surface diffraction grating (28).

5. The demultiplexer (50) recited in claim 1 wherein the photodetector array (54) is a two-dimensional array.

6. The demultiplexer (50) recited in claim 1 wherein the photodetectors of the photodetector array (54) are flip-chip bonded to other electronic components.

7. A method of demultiplexing an optical wave division multiplexed (WDM) signal (11), the method comprising:
dispersing the WDM signal (11) into its component optical signals; and
detecting the component optical signals with photodetectors (54) for conversion to electrical signals.

8. The method recited in claim 7 wherein each photodetector includes integrated electronic amplifier.

9. The method recited in claim 7 wherein the photodetectors (54) are aligned at an output plane (52) to detect the component optical signals.

10. The method recited in claim 7 wherein a surface diffraction grating (28) is used for dispersing the WDM signal (11).

11. The method recited in claim 7 wherein the photodetectors (54) are configured into a two dimensional array.

12. The method recited in claim 7 wherein the photodetectors (54) are flip-chip bonded to other electronic components.
